# EUROPÄISCHE PATENTSCHRIFT

(11) **EP 2 379 995 B1**
(45) Veröffentlichungstag und Bekanntmachung des Hinweises auf die Patenterteilung: **19.02.2014**
(21) Anmeldenummer: 09798883.6
(22) Anmeldetag: 16.12.2009
(51) Int. Cl.: G01G 3/12, G01G 21/30

(54) **WÄGEZELLE**
LOAD CELL
CELLULE DE PESAGE

(30) Priorität: 22.12.2008 DE 102008064169
(43) Veröffentlichungstag der Anmeldung: 26.10.2011
(73) Patentinhaber: Hottinger Baldwin Messtechnik GmbH, 64293 Darmstadt (DE)
(72) Erfinder: SCHMITTNER, Arno, D-89551 Königsbronn (DE); SCHERER, Ralf, D-55128 Mainz (DE)
(74) Vertreter: Staudte, Ralph
(86) Internationale Anmeldenummer: PCT/EP2009/009004
(87) Internationale Veröffentlichungsnummer: WO 2010/072364

(56) Entgegenhaltungen:
- US-A- 4 619 147
- US-A1- 2004 060 372

## Beschreibung

Die Erfindung betrifft eine Wägezelle, vorzugsweise für eine aseptische Plattformwaage, gemäß dem Oberbegriff des Patentanspruchs 1.

Wägezellen sind Sonderformen der Kraftaufnehmer und zum Aufbau von Wägevorrichtungen vorgesehen. Derartige Wägevorrichtungen werden häufig auch bei der Lebensmittelversorgung eingesetzt, so dass sie oft besonderen Hygienevorschriften genügen müssen. Deshalb ist es auch bei den dort verwendeten Wägezellen notwendig, dass diese so aufgebaut sind, dass sich an ihren Oberflächen kein Schmutz und keine Lebensmittelreste dauerhaft ansammeln kann oder zumindest leicht entfernbar sein muss. Des Weiteren befinden sich an derartigen Wägezellen häufig waagerechte Flächen, Spalten und Vertiefungen, die kaum zugänglich sind und deshalb nur schwer gereinigt werden können, wo sich dann leicht Bakterien, Viren und Pilze festsetzen. Deshalb ist es beim Einsatz von Wägezellen in vielen Bereichen der chemischen, pharmazeutischen, kosmetischen und Lebensmittelindustrie notwendig, dass diese leicht zu reinigen sind und möglichst keine Oberflächenbereiche aufweisen, auf denen sich Schmutz, Lebensmittelreste, Chemikalien, Bakterien, Viren und Pilze festsetzen, eindringen oder bilden können.

Ein hermetisch dichter Messgrößenaufnehmer, der eine Wägezelle darstellt, ist aus der DE 10 2004 047 508 B3 bekannt, der als horizontal einbaubarer Biegebalken ausgebildet ist. Dieser Biegebalken besteht aus einem Krafteinleitungs- und einem Kraftaufnahmeteil, zwischen denen ein Kraftmesselement angeordnet ist. Dabei besteht das Kraftmesselement aus einer vertikalen Biegefeder, die durch zwei gegenläufige horizontale Querbohrungen im mittleren Biegebalkenteil hergestellt wurde und an der beidseitig Dehnungsmessstreifen als Scherkraftaufnehmer appliziert sind, die bei einer Gewichtsbelastung ein proportionales elektrisches Signal erzeugen. Zur hermetischen Abdichtung sind dabei in den Bohrungen napfförmige metallische Blechteile eingeschweißt, die die empfindlichen elektrischen Messelemente hermetisch dicht verschließen. Dadurch wird hauptsächlich verhindert, dass Feuchtigkeit und andere korrodierende Schmutzpartikel mit den empfindlichen Messelementen in Berührung kommen, so dass eine langlebige Wägezelle geschaffen wurde. Diese Wägezelle ist zwar stabförmig und mit weitgehend flachen Außenflächen ausgestattet, wobei sich aber insbesondere auf der horizontal verlaufenden Deckfläche Lebensmittel- oder Flüssigkeitsreste absetzen können, die in Verbindung mit Feuchtigkeit zur Vermehrung von Bakterien oder Viren neigen. Des Weiteren könnten auch in den napfförmigen Vertiefungen Schmutz- und Lebensmittelbestandteile anhaften, die nur schwer zu reinigen sind, und in denen sich Pilze und Bakterien bilden könnten. Deshalb ist eine derartige auch hermetisch abgedichtete Wägezelle in aseptischen Bereichen nach einschlägigen Hygienevorschriften oft nicht einsetzbar.

Aus der DE OS 37 15 572 ist eine Wägezelle für eine elektromechanische Plattformwaage bekannt, die im Wesentlichen aus einem zylindrischen Rundstab besteht, von dem zumindest rieselfähige Lebensmittel und Flüssigkeiten mittels Schwerkraft ablaufen würden. Dabei ist eine Seite des Biegestabes mittels zweier Schrauben am Waagengehäuse befestigt, während das gegenüberliegende Ende als abgeflachter Rundstab mit der Wägeplattform in Verbindung steht, wobei die Gewichtskraft quer zur Längsrichtung einleitbar ist. Allerdings dürften bei dieser Wägezelle auf der Oberfläche des Biegestabes zur Erzeugung der elektrischen Messsignale die Dehnungsmessstreifen appliziert sein, so dass eine derartige Wägezelle nicht mit wässrigen Reinigungsmitteln gesäubert werden kann und deshalb in der Lebensmittelindustrie oder in aseptischen Bereichen nicht immer einsetzbar ist.

Eine weitere Wägezelle mit zylinderförmigem horizontal angeordnetem Gehäuse ist aus der DE OS 28 18 140 bekannt, die gegenüber Fremdeinflüssen vollkommen geschützt sein soll. Dabei ist im Gehäusekörper ein horizontaler runder Stab angeordnet, der in einem freitragenden Rohr an dessen einem Endbereich befestigt ist. An dem freitragenden Rohr sind auf dessen äußerer Mantelfläche Dehnungsmessstreifen appliziert, die bei einer vertikalen Krafteinleitung in den Endpunkt des Stabes eine Dehnung auf der äußeren Mantelfläche des Rohres erzeugen. Dabei ist das freitragende Rohr von einer zylinderförmigen Verschlusshülse als Gehäuseteil hermetisch dicht verschlossen. Allerdings wird die Krafteinleitung über einen Schraubbolzen in einer mindestens nach unten offenen Kammer ausgeführt, in der eine Krafteinleitungsöse den Stab umgreift, der in dieser offenen Kammer beweglich geführt ist. Da diese Kammer nicht hermetisch verschlossen ist, können darin Schmutz und Flüssigkeitsreste eindringen, die kaum entfernbar sind, so dass diese Wägezelle im Kontakt mit Lebensmitteln nicht verwendbar ist.

Aus der EP 1 698 871 A1 ist ein Einbausatz für eine Wägezelle vorbekannt, der insbesondere im Bereich der chemischen und pharmazeutischen, der Lebensmittel- und Kosmetikindustrie einsetzbar ist. Dabei enthält dieser Einbausatz eine vertikal angeordnete Wägezelle, die zwischen zwei parallelen horizontal angeordneten Montageplatten angeordnet ist. Als Krafteinleitungs- und Kraftausleitungselemente sind offensichtlich zwei runde Druckstücke vorgesehen, zwischen denen die Wägezelle angeordnet ist. Die Wägezelle ist dabei in einem runden, konisch verlaufenden Gehäuse verschlossen angeordnet, das so in die Druckstücke eingreift oder diese umfasst, dass dieser Einbausatz gut reinigbar ist und offensichtlich wenig Spalten und Hohlräume besitzt, in denen sich Bakterien, Viren und Pilze bilden können. Allerdings sind hierbei die Druckstücke als Krafteinleitungs- oder Kraftausleitungselemente nur lose mit der Wägezelle verbunden, so dass eine derartige Wägezelle nur vertikal einbaubar ist und auch nicht fest mit der Waage verbunden werden kann, so dass stets noch ein Einbausatz zusätzlich benötigt wird.

US 2004/060372 A1 und US 4 619 147 A zeigen weitere Wägezellen.

Der Erfindung liegt deshalb die Aufgabe zugrunde, eine hermetisch dichte Wägezelle so weiterzuentwickeln, dass diese leicht zu reinigen ist und keine Spalten, Vertiefungen und waagerechten Flächenteile enthält, in und auf denen sich Rückstände, Schmutz, Bakterien, Viren oder Pilze festsetzen oder vermehren können, so dass sie auch in aseptischer Umgebung, insbesondere in Anlagen zur Lebensmittelverarbeitung, einsetzbar ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass sie wegen der horizontalen Einbaulage auch nur vertikal abfallende Flächenteile aufweist, so dass alle damit in Verbindung kommenden Lebensmittel, Kosmetika- oder Pharmabestandteile sich nur schwer festsetzen können, wodurch eine Pilz-, Viren- oder Bakterienbildung weitgehend verhindert wird.

Durch die verschweißte Kapselung der Wägezelle ist diese auch gut mit wässrigen Lösungen reinigbar und desinfizierbar, so dass derartige Wägezellen vorteilhafterweise auch im aseptischen Bereich einsetzbar sind.

Bei einer besonderen Ausführungsart der Erfindung ist vorgesehen, das Kraftmesselement als Doppelbiegebalken auszubilden, mit dem vorteilhafterweise sehr hohe Messgenauigkeiten erzielbar sind. Mit derartigen Wägezellen sind deshalb vorteilhafterweise auch eichpflichtige Waagen herstellbar.

Bei einer anderen besonderen Ausführungsart besteht die gesamte Wägezelle aus einem hochfesten rostfreien Edelstahl, so dass eine derartige Wägezelle auch bei hoher Luftfeuchtigkeit und aggressiven Umgebungseinflüssen verwendbar ist und deshalb eine sehr langlebige Ausführung darstellt, die auch von den meisten Chemikalien oder pharmazeutischen Grundstoffen nicht angegriffen wird. Dabei ist es insbesondere vorteilhaft, die geschlossenen Ringelemente umlaufend so zu verjüngen, dass sie Membranen bilden, wodurch vorteilhafterweise ein rundum gekapseltes Messelement entsteht, das nach außen glatte abgerundete gut reinigbare Oberflächen aufweist, ohne eine nennenswerte Kraftnebenschlusswirkung auf das eigentliche Messelement auszuüben, wodurch gleichzeitig auch eine hohe Messgenauigkeit gewährleistet wird.

Durch die spezielle nahezu zylindrische Ausführung der Krafteinleitungs- und Kraftausleitungselemente wird vorteilhafterweise eine Ausführung erreicht, die in flachen Plattformwaagen einsetzbar ist. Dabei sind die Krafteinleitungs- und Kraftausleitungselemente mit parallelen vertikalen oder parallelen horizontalen Befestigungsflächen ausgestattet, so dass sie vorteilhafterweise eine horizontale oder vertikale Befestigung erlauben.

Bei einer weiteren besonderen Ausführung ist zusätzlich noch vorgesehen, die Wägezelle mit einer Schutzschicht zu versehen, die eine schwer anhaftbare Oberfläche aufweist, so dass damit in Berührung kommende rieselfähige oder flüssige Materialien ohne Rückstände abfließen und so auch ohne nennenswerte Reinigungsmaßnahmen eine Keimbildung insbesondere von Krankheitskeimen verhindert wird.

Die Erfindung wird anhand eines Ausführungsbeispiels, das in der Zeichnung dargestellt ist, näher erläutert. Es zeigen:
- Fig. 1:: eine hermetisch dichte Wägezelle mit vertikalen Befestigungsflächen, und
- Fig. 2:: eine hermetisch abgedichtete Wägezelle mit horizontalen Befestigungsflächen.

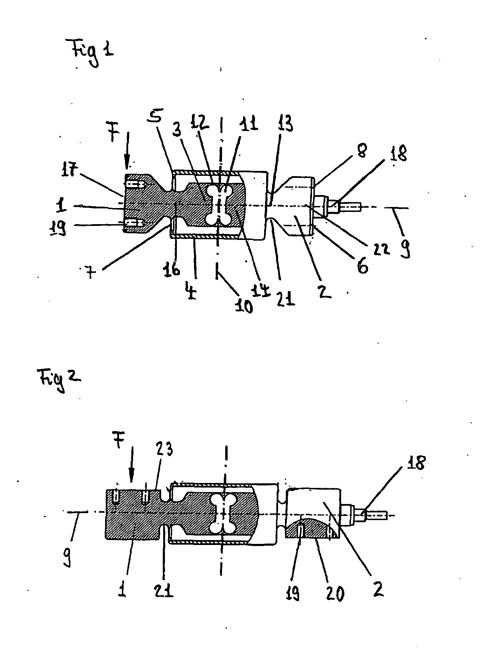

In Fig. 1 der Zeichnung ist eine hermetisch abgedichtete Wägezelle dargestellt, die rotationssymmetrisch ausgebildet ist, wobei in Längsrichtung zwischen dem Krafteinleitungs- 1 und Kraftausleitungselement 2 ein Doppelbiegebalken 3 angeordnet ist, der durch zwei an seinen Endbereichen vorgesehene Ringelemente 5, 6 und eine damit verschweißte Rohrhülse 4 verschlossen ist, wobei die Ringelemente 5, 6 konzentrisch umlaufende Dünnstellen als Membrane 7, 8 enthalten, die die Rohrhülse 4 biegeweich mit dem Krafteinleitungs- 1 und dem Kraftausleitungselement 2 und dem Doppelbiegebalken 3 verbinden.

Die Wägezelle besteht im Grunde aus einem zentralen Längskörper, aus dem das Krafteinleitungselement 1, das Kraftausleitungselement 2, der Doppelbiegebalken 3 und die beiden Ringelemente 5, 6 herausgearbeitet sind. Der Längskörper besteht dabei vorzugsweise aus einem hochwertigen rostfreien biegeelastischen Edelstahl, über den im fertigen Zustand die Rohrhülse 4 gestülpt und mit den beiden Ringelementen 5, 6 luftdicht verschweißt wird. Bei einer Wägezelle mit 10 kg Nennlast ist der zentrale Längskörper vorzugsweise 120 mm lang und etwa 40 mm im Durchmesser. Zwischen dem Krafteinleitungselement 1 und dem Kraftausleitungselement 2 ist der Doppelbiegebalken 3 angeordnet, der einen quaderförmigen Mittelteil 14 enthält. Symmetrisch zu einer Längsachse 9 und einer Querachse 10 ist im Mittelteil 14 eine horizontale Aussparung 11 vorgesehen, die durch vier horizontale Bohrungen einen kleeblattartigen Querschnitt aufweist. Dadurch entstehen an den beiden parallelen horizontalen Deckflächen des Mittelteils 14 als Biegefedern ausgebildete Stege 12, auf denen vorzugsweise acht Dehnungsmessstreifen appliziert sind, die bei einer vertikalen Kraftbelastung ein elektrisches Signal erzeugen, das der eingeleiteten Gewichtskraft F proportional ist.

An den beiden Enden des Mittelteils 14 sind zwei verjüngende runde Verbindungsstücke 13, 16 angebracht, die den Doppelbiegebalken 3 an der einen Seite mit dem Krafteinleitungselement 1 und an der gegenüberliegenden Seite mit dem Kraftausleitungselement 2 verbinden. Etwa in der Mitte jedes der axialen Verbindungsstücke 13, 16 ist quer zur Längsachse 9 jeweils ein Ringelement 5, 6 angebracht, dessen Außendurchmesser dem Innendurchmesser der Rohrhülse 4 entspricht und größer ist als der Durchmesser des Krafteinleitungselements 1 und des Kraftausleitungselements 2 und vorzugsweise ca. 39 mm beträgt. Die beiden Ringelemente 5, 6 sind auf der dem Doppelbiegebalken 3 zugewandten Ringfläche konzentrisch konkav verjüngt und bilden dadurch eine konzentrisch umlaufende erste 7 und zweite Membran 8, deren Dicke vorzugsweise 0,3 mm beträgt.

Im Anschluss an die runden Verbindungsstücke 13, 16, die vorzugsweise einen Durchmesser von 16 mm aufweisen, sind in axialer Richtung seitlich neben dem ersten Verbindungsstück 16 das Krafteinleitungselement 1 und seitlich neben dem zweiten Verbindungsstück 13 das Kraftausleitungselement 2 angebracht, die sich beide durch eine umlaufende Nut 21 nach außen kegelförmig auf vorzugsweise 38 mm Durchmesser erweitern, um dann in eine zylindrische Form von ca. 16 mm Länge überzugehen, die dann in einer flachen Stirnfläche 17 als vertikale Befestigungsfläche endet. Dabei sind sowohl das Krafteinleitungselement 1 als auch das Kraftausleitungselement 2 in ihrer äußeren Form identisch ausgebildet und beide symmetrisch zur Längs- 9 und Querachse 10 angeordnet. Im Kraftausleitungselement 2 ist in Längsrichtung noch eine zentrale Längsbohrung 22 vorgesehen, die mindestens bis zur Aussparung 11 verläuft und in der die Anschlussleitungen für die Dehnungsmessstreifen geführt sind. Deshalb ist in dem Kraftaufnahmeelement 2 noch ein Anschlusskabel 18 abgedichtet befestigt, in dem die Anschlussleitungen nach außen abgedichtet geführt sind.

Zur Befestigung der Wägezelle an einem Waagengestell sind auf der Stirnfläche 17 des Kraftausleitungselements 2 noch zwei horizontale Gewindebohrungen 19 angebracht, und zur Befestigung einer Wägeplattform sind ebenfalls an der Stirnfläche des Krafteinleitungselements 1 zwei gleichartige Gewindebohrungen 19 vorgesehen. Dabei stellen die beiden parallelen Stirnflächen 17 vertikale Befestigungsflächen dar, so dass derartige Wägezellen nicht nur für Plattformwaagen, sondern auch für jegliche andere Wägevorrichtungen einsetzbar sind, bei denen die Gewichtskraft F senkrecht zur Längsachse 9 in die Stirnfläche 17 der Wägezelle einleitbar ist.

Nach der Applizierung und Verdrahtung der Dehnungsmessstreifen wird der Doppelbiegebalken mittels einer übergeschobenen Rohrhülse 4 durch eine Verschweißung mit den Ringelementen 5, 6 hermetisch verschlossen. Die Rohrhülse 4 besteht dabei vorzugsweise auch aus einem hochfesten rostfreien Edelstahl, wobei ihre Länge dem Abstand zwischen den beiden Ringelementen 5, 6 entspricht und sie mit deren radialen Außenkanten luftdicht verschweißt wird. Die Rohrhülse 4 ist dabei biegesteif ausgebildet, wobei ihre äußere Mantelfläche nur eine geringe vorgegebene Rauhigkeit aufweist, die vorzugsweise durch eine Elektropolierung herstellbar ist, so dass diese eine gut ablaufende und leicht zu reinigende Oberfläche besitzt.

In Fig. 2 der Zeichnung ist eine alternative Ausführung einer Wägezelle dargestellt, die sich lediglich in der Ausbildung des Krafteinleitungselements 1 und des Kraftausleitungselements 2 von der Wägezelle nach Fig. 1 der Zeichnung unterscheidet. Dabei ist die Wägezelle nach Fig. 2 der Zeichnung für eine horizontale Befestigung in einer Wägevorrichtung vorgesehen. Deshalb sind auf der zylinderförmigen Oberfläche des Krafteinleitungselements 1 oben eine Abflachung 23 und bei dem Kraftausleitungselement 2 unten eine Abflachung 23 als plane horizontale Befestigungsfläche 20 vorgesehen, in die jeweils zwei Gewindebohrungen 19 quer zur Längsachse 9 eingebracht sind. Dadurch kann sich die Wägezelle mit der Abflachung 23 an dem Kraftausleitungselement 2 unten an einem Waagengestell abstützen, und auf der Abflachung 23 oben kann direkt eine Wägeplattform horizontal befestigt werden. Bei entsprechend angepassten Befestigungselementen an der Wägeplattform und dem Waagengestell könnten die Krafteinleitungselemente 1 und Kraftausleitungselemente 2 aber auch ohne Abflachung zylindrisch ausgebildet sein. Deshalb sind beide Ausführungen der Wägezellen im Wesentlichen rotationssymmetrisch ausgebildet und vorzugsweise für einen horizontalen Einbau vorgesehen.

Durch die Abdeckung der flachen oder abgeflachten Befestigungsflächen 17, 20 durch Befestigungselemente der Wägevorrichtung besitzen beide Ausführungen nur nach unten geneigte abgerundete Oberflächen, an denen rieselfähige oder flüssige Güter nach unten ablaufen können. Da die gesamten Oberflächen der Wägezellen vorzugsweise nur mit einer geringen Rauhigkeit ausgeführt werden, keine Hinterschneidung und keine engen Spalten aufweisen, können daran kaum rieselfähige Güter oder Flüssigkeiten anhaften. Bei einer weiteren Ausführung ist noch vorgesehen, die Wägezellen zusätzlich mit einer schwer anhaftenden Oberflächenbeschichtung zu versehen wie z. B. Polytetrafluorethylen (Teflon), wodurch eine Anhaftung zusätzlich verhindert und die Reinigungsmöglichkeit verbessert wird. Deshalb sind derartige Wägezellen vorzugsweise in der Lebensmittelversorgung einsetzbar, wobei jegliche Keimbildung insbesondere der Krankheitskeime oder deren Vermehrung verhindert werden muss.

Durch die Herstellung der Wägezellen aus Edelstahl und die Verkapselung des Doppelbiegebalkens durch die Verschweißung der Rohrhülse 4 mit den Edelstahlringelementen 5, 6 wird ein Eindringen von keimbildenden Stoffen absolut verhindert, so dass derartige Wägezellen auch in aseptischen Bereichen einsetzbar sind. Dabei wird insbesondere durch die beiden Membranen 7, 8 an den Ringflächen eine Entkopplung der eingeleiteten Gewichtskraft F erreicht, so dass nahezu keine Kraftnebenschlusskopplung zur biegesteifen Rohrhülse 4 auftritt, so dass eine hohe Messgenauigkeit erreichbar ist. Mit derartigen Wägezellen sind deshalb auch hochgenaue eichfähige Waagen herstellbar.

## Patentansprüche

1. Wägezelle, vorzugsweise für eine aseptische Plattformwaage, die stabförmig ausgebildet ist und aus einem Krafteinleitungs- (1) und einem Kraftausleitungselement (2) und einem axial dazwischen angeordneten Kraftmesselement besteht, wobei das Kraftmesselement einen Biegebalken (3) aufweist, dessen innenliegende Messfederteile (12) mit den darauf applizierten Dehnungsmessstreifen durch verschweißte Metallteile (4, 5, 6) hermetisch dicht verschlossen sind, und die zu messende Kraft F quer zur Längsachse (9) einleitbar ist, **dadurch gekennzeichnet, dass** das Krafteinleitungselement (1), das Kraftmesselement (3) und das Kraftausleitungselement (2) entlang einer Längsachse (9) weitgehend rotationssymmetrisch und abgerundet ausgebildet sind und dass das Kraftmesselement (3) aus einer biegesteifen Rohrhülse (4) mit dem darin angeordneten Biegebalken (3) besteht, wobei die Enden des Biegebalkens (3) mit quer zur Längsachse (9) ausgerichteten Ringelementen (5, 6) verbunden sind, die an ihrem radialen Randbereich mit der Rohrhülse (4) verschweißt sind, wobei die Ringelemente (5, 6) konzentrisch umlaufende biegeweiche Membranen (7, 8) enthalten, die die Rohrhülse (4) kraftnebenschlussfrei mit dem Biegebalken (3) und dem Krafteinleitungselement (1) und dem Kraftausleitungselement (2) verbinden.

2. Wägezelle nach Anspruch 1, **dadurch gekennzeichnet, dass** das entlang der Längsachse (9) angeordnete Krafteinleitungselement (1) und das anschließend um ein erstes Verbindungsstück (16) angeordnete erste Ringelement (5) sowie der damit verbundene Biegebalken (3) und das daran anschließende zweite Verbindungsstück (13) mit dem daran angeordneten zweiten Ringelement (6) und das damit verbundene Kraftausleitungselement (2) einstückig ausgebildet sind.

3. Wägezelle nach Anspruch 1 oder 2, **dadurch gekennzeichnet, dass** der Biegebalken als Doppelbiegebalken (3) ausgebildet ist, der aus einem quaderförmigen Mittelteil (14) besteht, in dem eine Aussparung (11) vorgesehen ist, die zwei horizontale parallele Stege (12) bildet, an denen die Dehnungsmessstreifen appliziert sind.

4. Wägezelle nach einem der vorhergehenden Ansprüche, **dadurch gekennzeichnet, dass** die Ringelemente (5, 6) um die zentral angeordneten Verbindungsstücke (13, 16) scheibenförmig ausgebildet sind und auf mindestens einem konzentrisch umlaufenden Ringflächenteil (7, 8) konzentrisch so verjüngt sind, dass sie jeweils eine biegeweiche Membran bilden.

5. Wägezelle nach Anspruch 4, **dadurch gekennzeichnet, dass** die Ringflächenseiten, die zum Biegebalken (3) gerichtet sind, eine konkav umlaufende Vertiefung (7, 8) aufweisen und dass die zu dem Krafteinleitungselement (1) und dem Kraftausleitungselement (2) gerichteten Ringflächenseiten plan ausgebildet sind.

6. Wägezelle nach einem der vorhergehenden Ansprüche, **dadurch gekennzeichnet, dass** das Krafteinleitungselement (1) und das Kraftausleitungselement (2) gleichartig ausgebildet und symmetrisch zu einer Querachse (10) angeordnet sind und durch eine umlaufende Nut (21) von den Ringelementen (5, 6) beabstandet sind.

7. Wägezelle nach einem der vorhergehenden Ansprüche, **dadurch gekennzeichnet, dass** das Krafteinleitungselement (1) und das Kraftausleitungselement (2) vertikal ebene oder horizontal ebene parallel zueinander angeordnete Befestigungsflächen (17, 20) enthalten, in denen Gewindebohrungen (19) angebracht sind.

8. Wägezelle nach einem der vorhergehenden Ansprüche, **dadurch gekennzeichnet, dass** das Krafteinleitungselement (1), die Verbindungsstücke (13, 16), die Ringelemente (5, 6) und der Biegebalken (3) aus einem hochfesten biegeelastischen rostfreien Edelstahl bestehen.

9. Wägezelle nach einem der vorhergehenden Ansprüche, **dadurch gekennzeichnet, dass** die Rohrhülse (4) aus einem biegesteifen hochfesten rostfreien Edelstahl besteht, dessen äußere Mantelfläche eine glatte Oberfläche aufweist.

10. Wägezelle nach einem der vorhergehenden Ansprüche, **dadurch gekennzeichnet, dass** die äußere Oberfläche der Wägezelle außerhalb der Befestigungsfläche (17, 20) nur abgerundete Flächenteile aufweist, die eine glatte Oberfläche von geringer Rauhigkeit besitzen.

11. Wägezelle nach einem der vorhergehenden Ansprüche, **dadurch gekennzeichnet, dass** die äußere Oberfläche mit einer schwer anhaftenden Beschichtung versehen ist.

12. Wägezelle nach einem der vorhergehenden Ansprüche, **dadurch gekennzeichnet, dass** das Kraftausleitungselement (2) eine zentrale Längsbohrung (22) enthält, die mindestens bis in die Aussparung (11) hineinreicht, wobei in der Längsbohrung (22) ein Anschlusskabel (18) abgedichtet befestigt ist.

## Claims

1. Load cell, preferably for an aseptic platform scale, which is embodied rod-shaped and consists of a force input element (1) and a force output element (2) and a force measuring element arranged axially therebetween, wherein the force measuring element comprises a bending beam (3), of which the internally located measuring spring parts (12) with the strain gauge strips applied thereon are hermetically tightly enclosed by welded metal parts (4, 5, 6), and the force F to be measured is introducible perpendicularly to the longitudinal axis (9), **characterized in that** the force input element (1), the force measuring element (3) and the force output element (2) are embodied substantially rotationally symmetrical and rounded-off along a longitudinal axis (9), and that the force measuring element (3) consists of a flexurally stiff pipe sleeve (4) with the bending beam (3) arranged therein, wherein the ends of the bending beam (3) are connected with ring elements (5, 6) which are oriented perpendicularly to the longitudinal axis (9), and which are welded with the pipe sleeve (4) at their radial edge area, wherein the ring elements (5, 6) include concentrically encircling flexurally soft membranes (7, 8), which connect the pipe sleeve (4) with the bending beam (3) and the force input element (1) and the force output element (2) in a force shunt free manner.

2. Load cell according to claim 1, **characterized in that** the force input element (1) arranged along the longitudinal axis (9) and the adjoining first ring element (5) arranged about a first connecting piece (16), as well as the bending beam (3) connected therewith, and the second connecting piece (13) adjoining thereon, with the second ring element (6) arranged thereon, and the force output element (2) connected therewith, are embodied as one piece.

3. Load cell according to claim 1 or 2, **characterized in that** the bending beam is embodied as a double bending beam (3) that consists of a parallelepiped block shaped middle part (14) in which a recess (11) is provided, which forms two horizontal parallel webs (12), on which the strain gauge strips are applied.

4. Load cell according to one of the preceding claims, **characterized in that** the ring elements (5, 6) are embodied disc-shaped about the centrally arranged connecting pieces (13, 16) and are concentrically tapered on at least one concentrically encircling annular ring surface part (7, 8) in such a manner that they respectively form a flexurally soft membrane.

5. Load cell according to claim 4, **characterized in that** the annular ring surface sides that are oriented facing toward the bending beam (3) comprise a concave encircling depression (7, 8) and that the annular ring surface sides oriented facing toward the force input element (1) and the force output element (2) are embodied flat.

6. Load cell according to one of the preceding claims, **characterized in that** the force input element (1) and the force output element (2) are embodied the same and are arranged symmetrically to a transverse axis (10), and are spaced apart from the ring elements (5, 6) by an encircling groove (21).

7. Load cell according to one of the preceding claims, **characterized in that** the force input element (1) and the force output element (2) include vertical planar or horizontal planar securing surfaces (17, 20) which are arranged parallel to one another, and in which threaded bored holes (19) are introduced.

8. Load cell according to one of the preceding claims, **characterized in that** the force input element (1), the connecting pieces (13, 16), the ring elements (5, 6) and the bending beam (3) consist of a high-strength, flexurally elastic, stainless high-grade steel.

9. Load cell according to one of the preceding claims, **characterized in that** the pipe sleeve (4) consists of a flexurally stiff, high-strength, stainless high-grade steel, of which the outer circumferential surface comprises a smooth surface.

10. Load cell according to one of the preceding claims, **characterized in that** the outer surface of the load cell outside of the securing surface (17, 20) comprises only rounded-off surface parts, which have a smooth surface of low roughness.

11. Load cell according to one of the preceding claims, **characterized in that** the outer surface is provided with a coating having difficult adhesion.

12. Load cell according to one of the preceding claims, **characterized in that** the force output element (2) includes a central longitudinal bored hole (22) which extends at least into the recess (11), wherein a connecting cable (18) is secured in a sealed manner in the longitudinal bored hole (22).

## Revendications

1. Cellule de pesage, de préférence destinée à une balance à plateforme aseptique, qui est configurée en forme de barre et composée d'un élément d'introduction de force (1) et d'un élément de sortie de force (2) et d'un élément de mesure de force disposé axialement entre eux, dans laquelle l'élément de mesure de force comprend une poutre de flexion (3) dont les parties élastiques de mesure intérieures (12), sur lesquelles sont appliquées des bandes de mesure d'allongement, sont enfermées hermétiquement par des éléments métalliques (4, 5, 6) soudés, et dans laquelle la force à mesurer F peut être introduite transversalement par rapport à l'axe longitudinal (9), **caractérisée en ce que** l'élément d'introduction de force (1), l'élément de mesure de force (3) et l'élément de sortie de force (2) sont configurés de façon à être arrondis et sensiblement symétriques en rotation le long d'un axe longitudinal (9), et **en ce que** l'élément de mesure de force (3) est constitué d'une gaine tubulaire (4) rigide en flexion dans laquelle est disposée la poutre de flexion (3), dans laquelle les extrémités de la poutre de flexion (3) sont reliées à des éléments annulaires (5, 6) orientés transversalement par rapport à l'axe longitudinal (9) et soudés à la gaine tubulaire (4) sur leur zone périphérique radiale, dans laquelle les éléments annulaires (5, 6) contiennent des membranes (7, 8) flexibles s'étendant concentriquement, lesquelles relient, sans dérivation de la force, la gaine tubulaire (4) à la poutre de flexion (3) et à l'élément d'introduction de force (1) et à l'élément de sortie de force (2).

2. Cellule de pesage selon la revendication 1, **caractérisée en ce que** l'élément d'introduction de force (1) disposé le long de l'axe longitudinal (9) et le premier élément annulaire (5) disposé de manière adjacente autour d'une première pièce de liaison (16), ainsi que la poutre de flexion (3) reliée à celui-ci et la deuxième pièce de liaison (13) adjacente sur laquelle est disposé le deuxième élément annulaire (6), et l'élément de sortie de force (2) relié à celui-ci, sont formés d'une seule pièce.

3. Cellule de pesage selon la revendication 1 ou 2, **caractérisée en ce que** la poutre de liaison est sous forme d'une poutre à double flexion (3), laquelle est composée d'une partie centrale (14) parallélépipédique dans laquelle est prévu un renfoncement (11) ayant la forme de deux nervures (12) parallèles horizontales sur lesquelles sont appliquées les bandes de mesure d'allongement.

4. Cellule de pesage selon l'une quelconque des revendications précédentes, **caractérisée en ce que** les éléments annulaires (5, 6) sont réalisés sous forme d'un disque autour des pièces de liaison (13, 16) disposées au centre, et sont rétrécis concentriquement sur au moins une partie de surface annulaire (7, 8) qui s'étend concentriquement de façon à ce qu'ils forment respectivement une membrane flexible.

5. Cellule de pesage selon la revendication 4, **caractérisée en ce que** les côtés de surface annulaire qui sont orientés vers la poutre de flexion (3) comprennent un renfoncement (7, 8) qui s'étend d'une manière concave, et **en ce que** les côtés de surface annulaire qui sont orientés vers l'élément d'introduction de force (1) et vers l'élément de sortie de force (2) ont une forme plane.

6. Cellule de pesage selon l'une quelconque des revendications précédentes, **caractérisée en ce que** l'élément d'introduction de force (1) et l'élément de sortie de force (2) sont identiquement formés, et sont disposés symétriquement par rapport à un axe transversal (10), et sont espacés des éléments annulaires (5, 6) par une rainure (21) périphérique.

7. Cellule de pesage selon l'une quelconque des revendications précédentes, **caractérisée en ce que** l'élément d'introduction de force (1) et l'élément de sortie de force (2) contiennent des surfaces de fixation (17, 20) verticalement ou horizontalement planes qui sont disposées parallèlement l'une à l'autre, et dans lesquelles sont ménagés des trous filetés (19).

8. Cellule de pesage selon l'une quelconque des revendications précédentes, **caractérisée en ce que** l'élément d'introduction de force (1), les pièces de liaison (13, 16), les éléments annulaires (5, 6) et la poutre de flexion (3) sont composés d'un acier inoxydable élastiquement flexible et à haute résistance.

9. Cellule de pesage selon l'une quelconque des revendications précédentes, **caractérisée en ce que** la gaine tubulaire (4) est composée d'un acier inoxydable à haute résistance et rigide en flexion, dont la surface d'enveloppe extérieure comprend une surface lisse.

10. Cellule de pesage selon l'une quelconque des revendications précédentes, **caractérisée en ce que** la surface extérieure de la cellule de pesage en dehors de la surface de fixation (17, 20) ne comprend que des parties de surface arrondies qui ont une surface lisse de faible rugosité.

11. Cellule de pesage selon l'une quelconque des revendications précédentes, **caractérisée en ce que** la surface extérieure est pourvue d'un revêtement difficilement adhérent.

12. Cellule de pesage selon l'une quelconque des revendications précédentes, **caractérisée en ce que** l'élément de sortie de force (2) contient un trou longitudinal (22) central qui s'étend au moins jusqu'au renfoncement (11), dans laquelle un câble de raccordement (18) est fixé de façon étanche dans le trou longitudinal (22).
